(19) Europäisches Patentamt
European Patent Office
Office européen des brevets

(11) **EP 4 227 032 A1**

(12) **EUROPÄISCHE PATENTANMELDUNG**

(43) Veröffentlichungstag:
**16.08.2023 Patentblatt 2023/33**

(21) Anmeldenummer: **23156012.9**

(22) Anmeldetag: **10.02.2023**

(51) Internationale Patentklassifikation (IPC):
**B23F 5/20** (2006.01)  **B23F 9/12** (2006.01)
**B23F 21/12** (2006.01)  **B23F 21/22** (2006.01)

(52) Gemeinsame Patentklassifikation (CPC):
**B23F 9/12; B23F 5/202; B23F 21/122; B23F 21/22**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **15.02.2022 DE 102022103513**

(71) Anmelder: **MAN Truck & Bus SE**
**80995 München (DE)**

(72) Erfinder:
• **Braykoff, Christo**
**80995 München (DE)**
• **Thomas, Joachim**
**85622 Feldkirchen (DE)**

(74) Vertreter: **v. Bezold & Partner Patentanwälte -
PartG mbB
Ridlerstraße 57
80339 München (DE)**

(54) **VERFAHREN ZUM VERZAHNEN VON VERSCHIEDEN GROSSEN KEGELRÄDERN**

(57)    Die Erfindung betrifft ein Verfahren zum Verzahnen von Kegelrädern (40), wobei die verzahnten Kegelräder (40) voneinander verschiedene Kegelradgrößen (40a, 40b, 40c, 40d), vorzugsweise voneinander verschiedene Durchmesser ($d_m$, $d_{ae}$, $d_e$), aufweisen. Hierbei wird zumindest ein drehantreibbarer Messerkopf bereitgestellt, wobei der Messerkopf eine vorgegebene Messerkonfiguration aufweist. Weiterhin werden die Kegelräder (40) mittels des zumindest einen Messerkopfs, vorzugsweise im Einzelteilverfahren, verzahnt, wobei die verzahnten Kegelräder (40) jeweils eine gleiche Zahnlückenform und/oder Zähnezahl aufweisen.

FIG. 2B

EP 4 227 032 A1

**Beschreibung**

Die Erfindung betrifft ein Verfahren zum Verzahnen von Kegelrädern, wobei die verzahnten Kegelräder voneinander verschiedene Kegelradgrößen aufweisen. Ferner betrifft die Erfindung Kegelräder, die nach ebendiesem Verfahren verzahnt sind.

Kegelräder werden bei spanender Herstellung (z. B. Fräsen) üblicherweise mittels automatisierter Verzahnmaschinen (z. B. CNC-Maschinen) hergestellt. Es existieren unterschiedliche Fertigungsverfahren, die in der Regel eigene Werkzeugsysteme erfordern und sich z. B. in der resultierenden Form der Flankenlängslinie unterscheiden. Die Fertigungsverfahren kann man dabei u. a. in "kontinuierliche Teilverfahren" und "Einzelteilverfahren" unterscheiden.

Beim kontinuierlichen Teilverfahren (engl. "face hobbing") werden alle Lücken eines Kegelrads quasi gleichzeitig gefertigt. Hierzu sind die Drehung des Messerkopfes und des zu bearbeitenden Kegelrads so gekoppelt, dass sich jeweils nur eine Messergruppe durch eine Zahnlücke bewegt. Aufgrund dieser Bewegungskopplung ergibt sich beim kontinuierlichen Teilverfahren eine (ggf. verlängerte) Epizykloide als Flankenlängslinie und eine sich über die Zahnbreite verändernde Zahnlückenweite.

Beim Einzelteilverfahren (engl. "face milling") wird hingegen immer nur eine Zahnlücke auf einmal gefertigt. Nachdem eine Zahnlücke erzeugt wurde, wird der Messerkopf zurückgezogen und das zu bearbeitende Kegelrad um eine Zahnteilung gedreht. Dieser Prozess wird solange wiederholt, bis alle Lücken fertig bearbeitet sind. Da die Schneiden des Werkzeugs hierbei kreisförmig angeordnet sind, hat die Flankenlängslinie die Form eines Kreisbogens.

Ein spezielles Einzelteilverfahren stellt das Completing-Verfahren dar. Bei diesem Verfahren werden Tellerrad und Ritzel im Zweiflankenschnitt komplett fertig bearbeitet (eng. completing). Hierzu kann z. B. ein Messerkopf mit Innenmessern und Außenmessern verwendet werden. Die Außenmesser schneiden dabei die Außenflanken (konkave Zahnflanken) am zu bearbeitenden Kegelrad und die Innenmesser die Innenflanken (konvexe Zahnflanken). Gegenüber anderen Einzelteilverfahren zeichnet sich das Completing-Verfahren durch eine höhere Produktivität aus, jedoch ist eine Veränderung der Flankenform schwieriger, da Veränderungen der Maschinenkinematik immer Einfluss auf beide Flanken haben. Aufgrund der sich ergebenden konstanten Zahnlückenweiten im Zahngrund von Ritzel und Tellerrad sind die Fuß- und Kopfkegelwinkel der Verzahnung abhängig vom gewählten Messerkopf bzw. Messersatz und können nicht frei gewählt werden. Die entsprechende Zahnhöhenform wird als Duplexkegel bezeichnet.

Das Completing-Verfahren wird vorwiegend in der Großserienindustrie eingesetzt. Grund hierfür ist, dass für jede Kegelradauslegung (auch bei gleichem Modul) ein individuelles Werkzeug benötigt wird, das genau dem geforderten Zahnlückenprofil entspricht. Insbesondere bei der Fertigung verschiedener Kegelradgrößen wird somit jeweils ein für die jeweilige Baugröße speziell ausgelegter bzw. konfigurierter Messerkopf benötigt.

Zum Beispiel in der Automobilindustrie ergeben sich jedoch häufig Situationen, in denen mehrere leicht verschiedene Kegelräder gefertigt werden müssen. Beispielsweise werden bei Getrieben, wie z. B. Achsgetrieben, in der Regel zwar modellübergreifend die gleichen Übersetzungsverhältnisse verwendet. Allerdings unterscheiden sich die entsprechenden Kegelradgrößen jedoch oftmals je nach Fahrzeugmodell. Bisher werden mehrere Messerköpfe bzw. Messersätze vorgehalten, um je nach Bedarf den einen Typ eines Kegelrads oder einen anderen Typ herstellen zu können. Neben den erheblichen Kosten für die Beschaffung bzw. Aufbereitung/Wartung der Messerköpfe ist hierbei zudem nachteilig, dass bei jedem Wechsel der zu fertigenden Kegelradgröße ein entsprechendes Umrüsten der Fertigungsmaschine erforderlich ist. Insgesamt besteht somit ein Bedarf an einer Lösung, mittels derer die Kosten und der Aufwand in solchen Situationen reduziert werden können.

Entsprechend ist es Aufgabe der Erfindung, eine verbesserte Möglichkeit zum Verzahnen Kegelrädern bereitzustellen, mittels derer vorzugsweise die Restriktionen der bisherigen Lösungen vermieden werden können. Besonders bevorzugt ist es dabei eine Aufgabe der Erfindung, eine Lösung bereitzustellen, die ein möglichst einfaches und kostengünstiges Verzahnen von unterschiedlichen Kegelradgrößen ermöglicht.

Diese Aufgaben können mit den Merkmalen des unabhängigen Anspruchs 1 gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten unabhängigen Aspekt wird ein Verfahren bereitgestellt. Vorzugsweise dient das Verfahren zum Verzahnen von Kegelrädern (z. B. Spiralkegelrädern). Besonders bevorzugt dient das Verfahren zum automatisierten und/oder maschinellen Verzahnen von Kegelrädern. D. h. das Verzahnen soll vorzugsweise mittels einer entsprechenden Werkzeugmaschine (z. B. einer CNC-Fräsmaschine erfolgen). Unter "Verzahnen" kann hierbei bevorzugt ein Schneiden einer Verzahnung, insbesondere ein Schneiden einer Vorverzahnung (z. B. Fräsen) und/oder ein Schneiden einer Fertigverzahnung (z. B. Schleifen) der Kegelräder verstanden werden. D. h. mit anderen Worten kann der Ausdruck "Verzahnen" vorzugsweise ein Einbringen einer Verzahnung bezeichnen. Weiterhin soll der Ausdruck "Kegelräder" bevorzugt sowohl Kegelräder mit als auch ohne Achsversatz umfassen, d. h. durch den Begriff "Kegelräder" sollen bevorzugt ausdrücklich auch Zahnräder mitumfasst sein, die gemeinhin als "Hypoidräder" bezeichnet werden. Vorzugsweise handelt es sich bei den Kegelrädern um spiralverzahnte Kegelräder, besonders bevorzugt um kreisbogenverzahnte Kegelräder, d. h. Kegelräder, die einen Kreisbogen als Flankenlängslinie aufweisen.

Es ist vorgesehen, dass die verzahnten Kegelräder voneinander verschiedene Kegelradgrößen (z. B. Baugrößen) aufweisen. D. h. das Verfahren kann bevorzugt auch als ein Verfahren zum Verzahnen unterschiedlicher und/oder unterschiedlich großer Kegelräder bezeichnet werden. Vorzugsweise weisen die verzahnten Kegelräder dabei voneinander verschiedene Durchmesser (z. B. äußere Durchmesser und/oder Teilkreisdurchmesser) auf. Bevorzugt soll jedoch die Übersetzung bzw. die Zähnezahl der verzahnten Kegelräder gleich sein.

Im Zusammenhang mit dem beanspruchten Verfahren wird zumindest ein, vorzugsweise drehantreibbarer, Messerkopf bereitgestellt. Der zumindest eine Messerkopf weist dabei eine vorgegebene Messerkonfiguration auf. D. h. der zumindest eine Messerkopf kann einen Messerkopf oder mehrere (gleiche) Messerköpfe umfassen, die jeweils die vorgegebene Messerkonfiguration aufweisen. Der zumindest eine Messerkopf kann zur Montage in einer entsprechenden Werkzeugmaschine ausgebildet sein. Die vorgegebene, d. h. zuvor festgelegte, Messerkonfiguration kann dabei eine Anzahl, Anordnung und/oder Form von Messern (z. B. Profil und/oder Stabmessern) des zumindest einen Messerkopf umfassen.

Weiterhin ist vorgesehen, dass die Kegelräder mittels des bereitgestellten zumindest einen Messerkopfs verzahnt (z. B. vorverzahnt) werden. Bevorzugt sollen die verschiedenen Kegelräder somit alle mittels ein und desselben Messerkopfs oder mittels mehrerer Messerköpfe mit jeweils gleicher bzw. identischer Messerkonfiguration verzahnt werden. D. h. mit anderen Worten soll beim Verzahnen der verschiedenen Kegelradgrößen vorzugsweise jeweils die gleiche (vorgegebene) Messerkonfiguration verwendet werden. Besonders bevorzugt werden die Kegelräder mittels des zumindest einen Messerkopfs im Einzelteilverfahren verzahnt. Entsprechend sollen vorzugsweise bei jedem der Kegelräder die jeweiligen Zahnlücken nacheinander gefertigt werden.

Das Verfahren zeichnet sich dadurch aus, dass die verzahnten Kegelräder jeweils eine gleiche Zahnlückenform und/oder Zähnezahl aufweisen. D. h. trotz ihrer voneinander verschiedenen Kegelradgrößen (z. B. verschiedene Durchmesser) sollen die verzahnten Kegelräder vorzugsweise jeweils über die gleiche Zahnlückenform (z. B. die gleiche Zahnlückenweite im Zahngrund, die gleiche Flankenform und/oder die gleiche Neigung der Zahnfußlinie) und/oder die gleiche Zähnezahl verfügen. Auf vorteilhafte Weise muss somit beim Verzahnen der verschiedenen Kegelradgrößen kein Wechsel des Messerkopfs bzw. der Messerkonfiguration und damit kein Umrüsten der entsprechenden Werkzeugmaschine vorgenommen werden. Dadurch ermöglicht das Verfahren auf vorteilhafte Weise eine effiziente Herstellung möglichst vieler Bauteile, wobei die Kapazität eines fertig geschliffenen und eingestellten Messerkopfs möglichst vollumfänglich ausgenutzt werden kann. Neben der Zeitersparnis ist dies auch insbesondere dahingehend von Vorteil, dass für verschiedene Kegelradgrößen nicht wie bislang verschiedene Messerköpfe vorgehalten werden müssen, wodurch sich insgesamt die Herstellungskosten sowie der Aufbereitungs- bzw. Wartungsaufwand reduzieren lässt.

Gemäß einem Aspekt können die Kegelräder jeweils im Completing-Verfahren verzahnt werden. Wie vorstehend ausgeführt wurde, können bei diesem - an sich bekannten Verfahren - die jeweiligen Kegelräder bevorzugt im Zweiflankenschnitt komplett fertig bearbeitet werden. Hierbei können die jeweiligen Zahnlücken in einem Schnitt mit einer Maschineneinstellung für die konkaven und konvexen Flanken gleichzeitig gefertigt werden. Dieses Vorgehen steht im Gegensatz zum Einflankenschnitt, bei dem die beiden Flanken mit unterschiedlichen Werkzeugmaschineneinstellungen und/oder zwei unterschiedlichen Messerköpfen getrennt erzeugt werden. Die Kegelräder weisen dabei bevorzugt eine konstante Zahnlückenweite im Zahngrund auf.

Zudem oder alternativ können die verzahnten Kegelräder jeweils eine - an sich bekannte - Duplex-Kegel-Zahnhöhenform oder eine Duplex-Kegel-ähnliche Zahnhöhenform aufweisen. D. h. bevorzugt weisen die verzahnten Kegelräder jeweils eine im Vergleich zur Standard-Kegel-Zahnhöhenform zusätzlich geneigte Zahnfußlinie auf. Dies ist erforderlich, um eine im Normalschnitt konstante Lückenweite im Zahngrund zu erhalten. Bei der vorgenannten Standard-Kegel-Zahnhöhenform ändert sich die Zahnfußhöhe direkt proportional zur Teilkegellänge des betrachteten Stirnabschnitts. Die verlängerte Zahnfußlinie kann dabei die Achse des Kegelrads in dem Punkt schneiden, der mit der Teilkegelspitze zusammenfällt. Dies ist vorzugsweise bei der Duplex-Kegel-Zahnhöhenform aufgrund der vorstehend erwähnten zusätzlichen Neigung der Zahnfußlinie nicht der Fall. Als Duplex-Kegel-ähnliche Zahnhöhenform kann in diesem Zusammenhang bevorzugt eine Zahnhöhenform verstanden werden, bei der der Fußkegelwinkel vom originalen Duplex-Kegelwinkel (z. B. um bis zu 10%) abweicht.

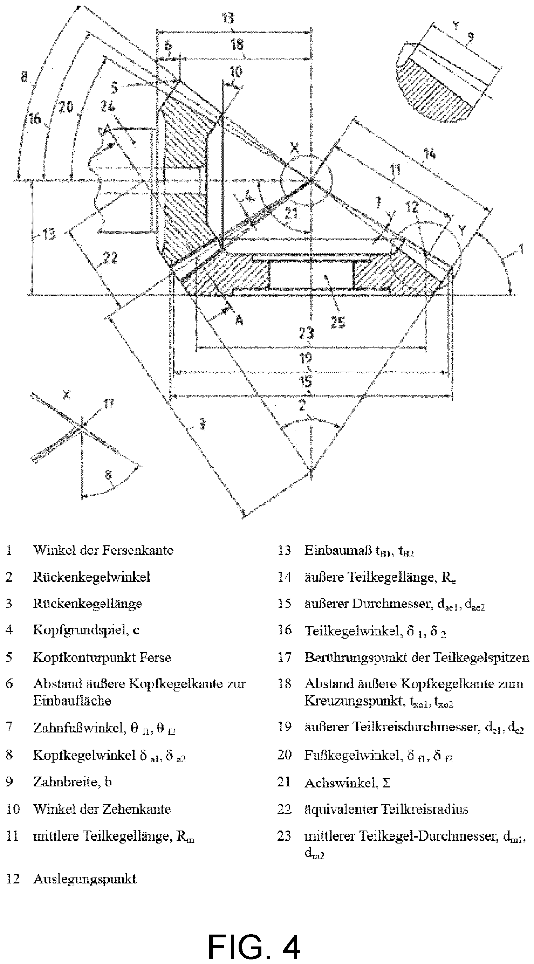

Nach einem weiteren Aspekt können die Kegelräder mit voneinander verschiedenen Kegelradgrößen jeweils mit im Wesentlichen dem gleichen Fußkegelwinkel $\delta r$ verzahnt werden. D. h. die verschieden großen verzahnten Kegelräder können alle eine Verzahnung mit dem gleichen Fußkegelwinkel $\delta r$ aufweisen. Als Fußkegelwinkel $\delta r$ kann dabei bevorzugt ein Winkel verstanden werden, der von einer Radachse des jeweiligen Kegelrads und einer Fußkegel-Mantellinie des Kegelrads eingeschlossenen wird (vgl. auch Figur 4). Wie vorstehend bereits erwähnt wurde, kann sich der Fußkegelwinkel vom originalen Duplex-Kegelwinkel unterscheiden.

Zudem oder alternativ können die Kegelräder jeweils mit den gleichen Fußrundungsradien

$$\varrho_{f1},$$

$$Q_{f2}$$

verzahnt werden. D. h. die verzahnten Kegelräder mit voneinander verschiedenen Kegelradgrößen können alle Zahnlücken mit den gleichen Fußrundungsradien

$$Q_{f1}, \ Q_{f2}$$

aufweisen. Als Fußrundungsradien

$$Q_{f1}, \quad Q_{f2}$$

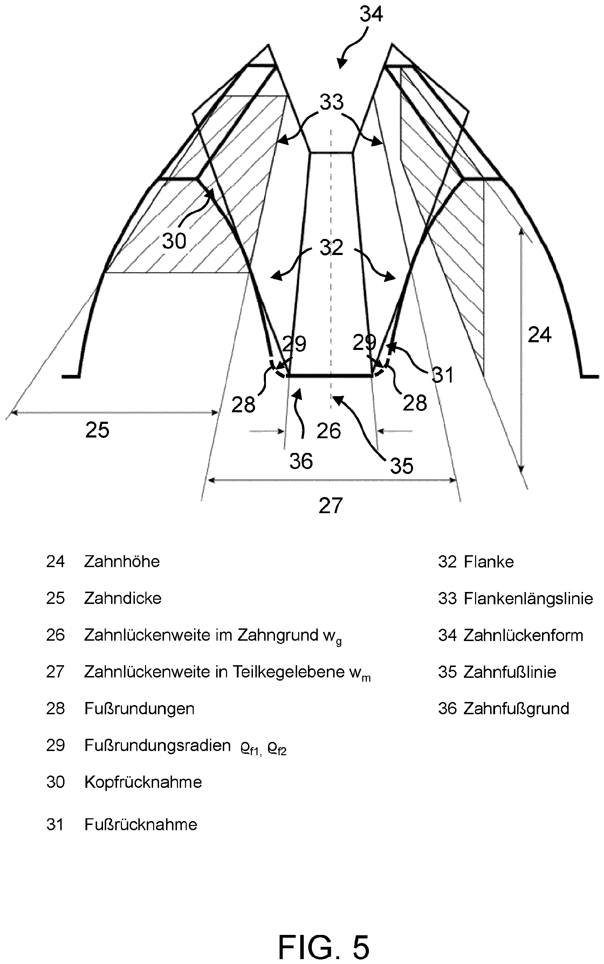

können dabei bevorzugt Radien von Fußausrundungen im Übergang zwischen Zahngrund und linker bzw. rechter Zahnflanke verstanden werden (vgl. auch Figur 5).

Gemäß einem weiteren Aspekt kann die vorgegebene Messerkonfiguration des zumindest einen Messerkopfs, zumindest einen Flugkreisradius von Messern des Messerkopfs umfassen. Als Flugkreisradius kann dabei bevorzugt der Abstand einer profilgebenden Schneide von der Rotationsachse des Messerkopfes verstanden werden. Bevorzugt bestimmt der zumindest eine Flugkreisradius einen Krümmungsradius der Flankenlängslinie der Zahnlücken. Der zumindest eine Flugkreisradius kann bspw. einen Flugkreisradius von Außenschneiden und einen Flugkreisradius von Innenschneiden umfassen. Zudem oder alternativ kann die vorgegebene Messerkonfiguration des zumindest einen Messerkopfs auch eine Spitzenweite von Messern des Messerkopfs umfassen. Als Spitzenweite kann dabei bevorzugt ein Abstand zwischen Außen- und Innenscheiden verstanden werden. Bevorzugt bestimmt die Spitzenweite eine Zahnlückenweite der Verzahnung. Zudem oder alternativ kann die vorgegebene Messerkonfiguration des zumindest einen Messerkopfs auch eine Kopf- und/oder Fußrücknahme umfassen. Als Kopfrücknahme kann dabei bevorzugt eine zusätzliche Werkstoffabtragung am Zahnkopf verstanden werden, während als Fußrücknahme vorzugsweise eine entsprechende Werkstoffabtragung am Zahnfuß verstanden werden kann. Werden Zahnkopf und Zahnfuß gleichzeitig zurückgelegt, dann ergibt sich daraus eine Höhenballigkeit der Verzahnung. Zudem oder alternativ kann die vorgegebene Messerkonfiguration des zumindest einen Messerkopfs auch einen Werkzeugeingriffswinkel umfassen. Als Werkzeugeingriffswinkel kann dabei ein Winkel verstanden werden, den der Teil des Werkzeugs bildet, der während des Bearbeitungsprozesses in das Werkstück eingreift. Der Werkzeugeingriffswinkel kann bspw. ein Flankenwinkel der Messer sein. Zudem oder alternativ kann die vorgegebene Messerkonfiguration des zumindest einen Messerkopfs auch einen Profilkrümmungsradius umfassen. Die vorgenannten Größen können hierbei im Folgenden auch als Werkzeugparameter bezeichnet werden. Insgesamt kann dadurch auf vorteilhafte Weise ein Wechsel des Messerkopfs bzw. ein Umrüsten der Werkzeugmaschine vermieden werden.

Nach einem weiteren Aspekt kann die vorgegebene Messerkonfiguration für ein Referenz-Kegelrad mit einem Referenz-Durchmesser festgelegt werden. Alternativ kann die vorgegebene Messerkonfiguration für ein Referenz-Kegelrad mit einem Referenz-Durchmesser aus einer Mehrzahl möglicher Messerkonfigurationen ausgewählt werden. Beispielsweise kann für ein Referenz-Kegelrad eine bestimmte Kegelradauslegung, z. B. hinsichtlich Zahnlückenform und/oder Zähnezahl, festgesetzt werden. Für diese Kegelradauslegung kann sodann eine entsprechende Messerkonfigurationen festgelegt oder ausgewählt werden, mittels derer die festgesetzte Kegelradauslegung erzeugt werden kann. D. h. der Messerkopf bzw. die Messerkonfiguration kann hinsichtlich eines Referenz-Kegelrads mit einem Referenz-Durchmesser ausgelegt werden und anschließend zum Durchführen des Verzahnens bereitgestellt werden. Weiterhin können die verschiedenen Durchmesser der verzahnten Kegelräder um bis zu 30%, vorzugsweise um bis zu 15%, besonders bevorzugt um bis zu 10%, vom Referenz-Durchmesser abweichen.

Gemäß einem weiteren Aspekt kann die Zahnlückenform zumindest eine der folgenden Größen umfassen (vgl. auch Figur 5): eine Zahnlückenweite im Zahngrund $w_g$, eine Zahnlückenweite in Teilkegelebene $w_m$, einen Verlauf des Zahnfußgrunds und/oder eine Flankenform (z. B. eine Krümmung der Flanken). Zudem oder alternativ kann die Zahnlückenform auch einen Fußkegelwinkel $\delta_f$, Fußrundungsradien

$$Q_{f1}, Q_{f2},$$

einen Verlauf der Zahnfußlinie und/oder eine Kopf- und/oder Fußrücknahme umfassen. D. h. insgesamt können die Zahnlücken der verzahnten Kegelräder mit voneinander verschiedene Kegelradgrößen sich in zumindest einer der vorgenannten Größen gleichen. Bevorzugt bezeichnet der Ausdruck "Zahnlückenform" dabei allgemein die Form bzw.

geometrische Ausgestaltung der Zahnlücken der jeweiligen Verzahnung. Besonders bevorzugt soll der Ausdruck Zahnlückenform das Profil der jeweiligen Zahnlücken, d. h. das Zahnlückenprofil (z. B. im Normalschnitt), und/oder den Verlauf des Profils entlang der Zahnfußlinie bezeichnen. Dies kann insbesondere aus der Herstellung der entsprechenden Verzahnungen mittels des gleichen Messerkopfs bzw. der gleichen Messerkonfiguration resultieren.

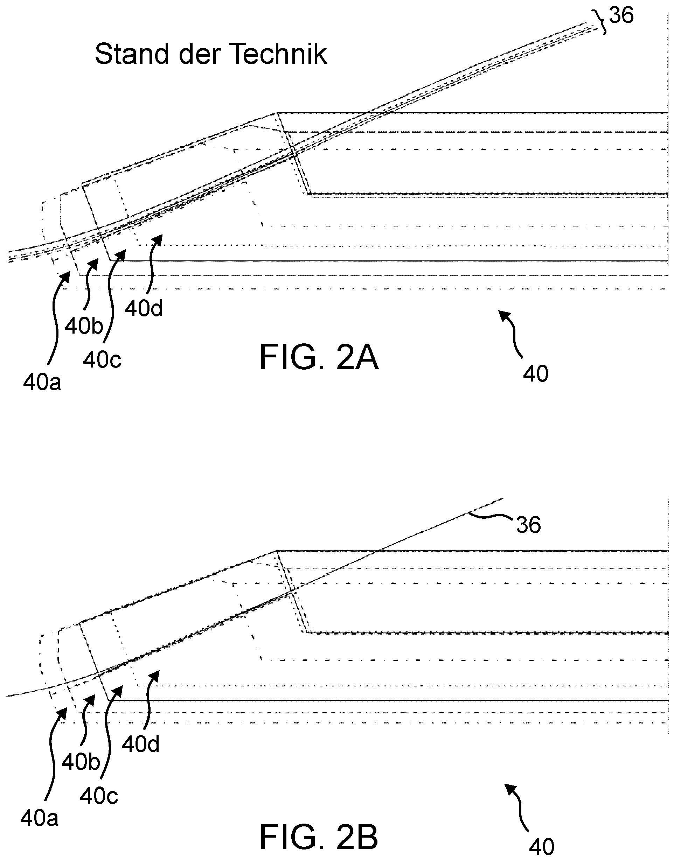

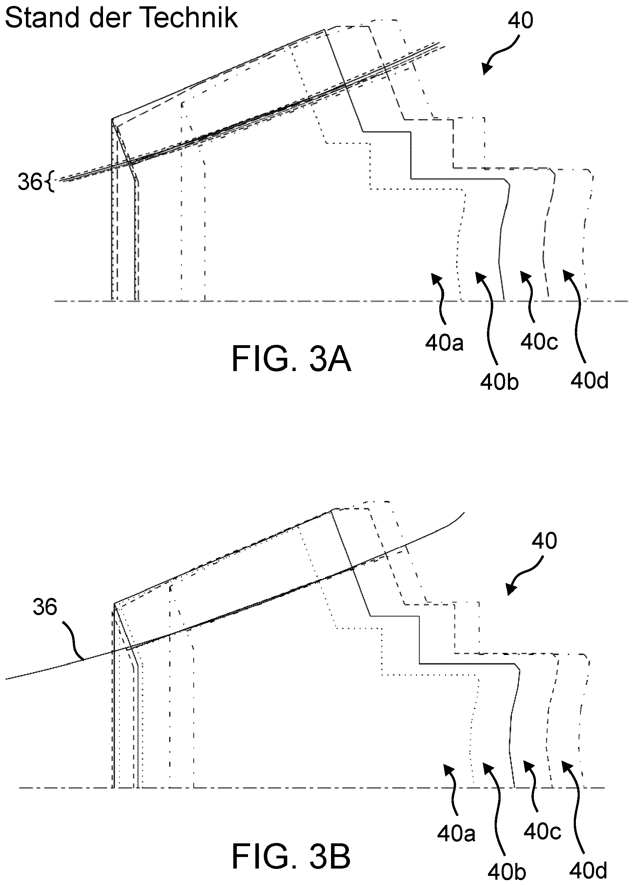

Nach einem weiteren Aspekt können jeweilige Zahnfußkurven zweier verzahnter Kegelräder mit verschiedenen Kegelradgrößen im Axialschnitt im Bereich eines kleineren der zwei verzahnten Kegelräder übereinander liegen. D. h. die jeweiligen Zahnfußkurven der verschieden großen Kegelräder können sich zwar in ihrer Länge unterscheiden, jedoch sollen sie im Axialschnitt im Bereich eines kleineren der zwei Kegelräder bevorzugt einen identischen Verlauf aufweisen. Als Zahnfußkurve kann dabei vorzugsweise ein Verlauf des Zahnfußgrundes einer Verzahnung der jeweiligen Kegelräder verstanden werden (vgl. z. B. auch Figur 2 und 3). Anschaulich gesprochen kann das größere Kegelrad eine im Vergleich zum kleinen Kegelrad lediglich verlängerte Zahnlücke aufweisen.

Gemäß einem weiteren Aspekt können die Kegelräder verzahnt werden, indem mittels des zumindest einen Messerkopfs jeweils eine Verzahnung in Kegelradrohlinge erzeugt wird. D. h. die Kegelradrohlinge können mittels des zumindest einen Messerkopfs, vorzugsweise im Einzelteilverfahren zu (verzahnten) Kegelrädern verzahnt, vorzugsweise vorverzahnt, werden. In diesem Zusammenhang kann das Verfahren bevorzugt auch als Verfahren zum Verzahnen von Kegelradrohlingen zu (verzahnten) Kegelrädern bezeichnet werden. Bevorzugt weisen die Kegelradrohlinge dabei verschiedene Größen, vorzugsweise voneinander verschiedene Durchmesser, auf. Die verschiedenen Größen der Kegelradrohlinge können dabei zu den verschiedenen Kegelradgrößen der verzahnten Kegelräder korrespondieren. Zudem oder alternativ können die Kegelradrohlinge jeweils eine Kontur aufweisen, die außerhalb eines jeweiligen Zerspanungsbereichs des zumindest einen Messerkopfs bereits im Wesentlichen einer Fertigkontur des jeweiligen verzahnten Kegelrads entspricht. D. h. die Kegelradrohlinge können jeweils abgesehen von der in diese einzubringenden Verzahnung in ihren Abmessungen dem entsprechenden (fertigen) verzahnten Kegelrad entsprechen.

Nach einem weiteren Aspekt kann der zumindest eine Messerkopf ausschließlich einen Messerkopf umfassen. D. h. gemäß dieser Variante können die Kegelräder alle mittels ein und desselben Messerkopfs verzahnt werden. Alternativ dazu kann der zumindest eine Messerkopf auch mehrere, vorzugsweise gleiche, Messerköpfe umfassen, die jeweils die vorgegebene Messerkonfiguration aufweisen. D. h. gemäß dieser Variante können auch mehrere (z. B. baugleiche bzw. identische) Messerköpfe bereitgestellt werden, welche alle die gleiche (vorgegebene) Messerkonfiguration aufweisen. Beispielsweise können die entsprechenden Messerköpfen an verschiedenen Werkzeugmaschinen eingesetzt werden, sodass das Verzahnen der Kegelräder z. B. parallelisiert werden kann. Beispielsweise kann so eine erste Kegelradgröße an einer ersten Werkzeugmaschine verzahnt werden, während eine zweite (von der ersten unterschiedliche) Kegelradgröße an einer zweiten Werkzeugmaschine verzahnt werden kann, wobei in beiden Fällen die entsprechenden Messerköpfe jeweils die gleiche, d. h. identische, Messerkonfiguration aufweisen.

Nach einem weiteren Aspekt können die verzahnten Kegelräder jeweils wärmebehandelt, (z. B. gehärtet) werden. Hierbei können die verzahnten Kegelräder z. B. in einem vorbestimmten Zeit-Temperatur-Ablauf erwärmt und wieder abgekühlt werden. Auf vorteilhafte Weise können dadurch Werkstoffeigenschaften, wie z. B. Festigkeit und/oder Zähigkeit, der verzahnten Kegelräder beeinflusst werden und dadurch die Lebensdauer der Kegelräder gesteigert werden.

Gemäß einem weiteren Aspekt kann zumindest ein, vorzugsweise drehantreibbarer, Schleifkopf bereitgestellt werden. Der zumindest eine Schleifkopf kann dabei nur einen (einzigen) Schleifkopf oder mehrere (z. B. gleiche) Schleifköpfe umfassen. Der zumindest eine Schleifkopf kann zur Montage in einer entsprechenden Werkzeugmaschine ausgebildet sein.. Weiterhin ist vorgesehen, dass die verzahnten, und vorzugsweise wärmebehandelten, Kegelräder mittels des zumindest einen Schleifkopfs geschliffen, vorzugsweise hartfeinbearbeitet, werden. D. h. im Anschluss an ein Vorverzahnen der verschieden großen Kegelräder (und optionalem Härten) können die verschieden großen Kegelräder fertigverzahnt werden.

Nach einem weiteren Aspekt können die (vor)verzahnten, und vorzugsweise wärmebehandelten, Kegelräder jeweils mit zumindest teilweise unterschiedlichen Schleifscheibenkonfigurationen des zumindest einen Schleifkopfs geschliffen werden. D. h. im Gegensatz zum vorstehend beschriebenen (Vor)Verzahnen, bei welchem für die verschiedenen Kegelräder jeweils dieselbe Messerkonfiguration verwendet wurde, können beim Schleifen bzw. Fertigverzahnen der (vorverzahnten) Kegelräder zumindest teilweise unterschiedlichen Schleifscheibenkonfigurationen des zumindest einen Schleifkopfs verwendet werden. Die Schleifscheibenkonfiguration kann dabei bevorzugt durch eine Form, ein Material und/oder Anordnung einer am Schleifkopf vorhandenen Schleifscheibe bestimmt sein. Bevorzugt sind die Schleifscheibenkonfigurationen jedoch weitgehend gleich. So ist besonders bevorzugt vorgesehen, dass, falls die Kegelräder mit entsprechenden Bearbeitungszugaben verzahnt wurden, sich die unterschiedlichen Schleifscheibenkonfigurationen im Wesentlichen um die entsprechenden Bearbeitungszugaben unterscheiden sollen oder bezüglich zusätzlich eingebrachter Kopfrücknahmen, Fußrücknahmen und/oder Profilballigkeiten unterscheiden sollen. Mit anderen Worten wird dadurch eine Größenordnung für Abweichungen der unterschiedlichen Schleifscheibenkonfigurationen vorgegeben. Als Bearbeitungszugabe kann hierbei bevorzugt eine Stoffzugabe an einem jeweiligen Werkstück verstanden werden, um bei der Bearbeitung (Vorverzahnung) die tatsächlich benötigten Fertigmaße zu erreichen, also die Differenz zwischen Roh- und Fertigmaß.

Gemäß einem weiteren Aspekt können die (vor)verzahnten, und vorzugsweise wärmebehandelten, Kegelräder jeweils mit einer gleichen vorgegebenen Schleifscheibenkonfiguration des zumindest einen Schleifkopfs geschliffen werden. Bevorzugt sollen die verschieden großen (verzahnten) Kegelräder somit alle mit einer identischen Schleifscheibenkonfiguration des zumindest einen Schleifkopfs geschliffen werden. Es versteht sich wiederum, dass die (vorverzahnten) Kegelräder dabei z. B. alle mittels ein und desselben Schleifkopfs oder (z. B. parallel) mittels mehrerer gleicher Schleifköpfe (mit identischer Schleifscheibenkonfiguration), die an verschiedenen Maschinen montiert sind, geschliffen werden können. D. h. in dieser Variante soll beim Schleifen der verschiedenen Kegelradgrößen vorzugsweise jeweils die gleiche Schleifscheibenkonfiguration für alle Kegelräder verwendet werden. Besonders bevorzugt werden die beiden Flanken einer Zahnlücke der Verzahnung der jeweiligen verzahnten Kegelräder gleichzeitig geschliffen. Auf vorteilhafte Weise muss somit beim Schleifen der verschiedenen Kegelradgrößen kein Umrüsten der Werkzeugmaschine (z. B. ein Wechsel des Schleifkopfs bzw. der Schleifscheibenkonfiguration) vorgenommen werden. Ein weiterer Vorteil ist, dass dadurch die Häufigkeit des Abrichtens auch beim Baugrößenwechsel und die damit verbundene Abnutzung der Schleifscheibe reduziert werden kann.

Weiterhin können Werkzeugparameter der Schleifscheibenkonfiguration und Werkzeugparameter der Messerkonfiguration im Wesentlichen gleich sein. Die Werkzeugparameter können dabei z. B. zumindest ein Flugkreisradius, eine Spitzenweite, eine Kopfrücknahme, eine Fußrücknahme, ein Werkzeugeingriffswinkel und/oder ein Profilkrümmungsradius sein. Alternativ können sich Werkzeugparameter der Schleifscheibenkonfiguration und Werkzeugparameter der Messerkonfiguration auch (leicht) unterscheiden. Dies kann bevorzugt dann der Fall sein, falls die Kegelräder mit entsprechenden Bearbeitungszugaben verzahnt wurden. Entsprechend können sich, falls die Kegelräder mit entsprechenden Bearbeitungszugaben verzahnt wurden, die Werkzeugparameter der Schleifscheibenkonfiguration und Werkzeugparameter der Messerkonfiguration im Wesentlichen um die entsprechenden Bearbeitungszugaben unterscheiden oder bezüglich zusätzlich eingebrachter Kopfrücknahmen, Fußrücknahmen und/oder Profilballigkeiten unterscheiden. Mit anderen Worten soll dadurch bevorzugt wiederum eine Größenordnung für Abweichungen der Schleifscheibenkonfiguration von der Messerkonfiguration vorgegeben werden.

Gemäß einem weiteren Aspekt können die Kegelräder Tellerräder umfassen. D. h. mittels des Verfahrens sollen bevorzugt Tellerräder, die voneinander verschiedene Tellerradgrößen aufweisen, verzahnt können. Wie vorstehend bereits ausgeführt wurde, werden die verschiedenen Tellerräder dabei vorzugsweise mittels ein und desselben Messerkopfs oder mehrerer (gleicher) Messerköpfe mit identischer Messerkonfiguration verzahnt. Zur besseren Unterscheidung kann der zumindest eine Messerkopf hierbei auch als Tellerrad-Messerkopf bezeichnet werden. Weiterhin kann das Verfahren auch umfassen, dass zumindest ein, vorzugsweise drehantreibbarer, weiterer Messerkopf bereitgestellt wird, der eine vorgegebene weitere Messerkonfiguration aufweist. Dieser weitere zumindest eine weitere Messerkopf kann im Folgenden auch als Ritzel-Messerkopf bezeichnet werden. Der zumindest eine weitere Messerkopf bzw. Ritzel-Messerkopf kann dabei wiederum einen (einzigen) Ritzel-Messerkopf oder mehrere (gleiche) Ritzel-Messerköpfe umfassen, die jeweils die vorgegebene weitere Messerkonfiguration aufweisen. Ferner kann das Verfahren umfassen, dass Ritzel mittels des bereitgestellten zumindest einen weiteren Messerkopfs, vorzugsweise im Einzelteilverfahren, verzahnt, vorzugsweise vorverzahnt, werden. Somit kann zum Verzahnen der verschieden großen Tellerräder jeweils ein und derselbe Tellerrad-Messerkopf verwendet werden und zum Verzahnen von verschieden großen Ritzeln der jeweils ein und derselbe Ritzel-Messerkopf verwendet werden. Bevorzugt ist jedes der Ritzel dabei jeweils einem der Tellerräder zugeordnet. D. h. jeweils eines der Ritzel kann für einen kämmenden Eingriff mit jeweils einem der Tellerräder (z. B. zur Ausbildung eines Kegelradgetriebes) ausgebildet sein. Entsprechend können auch die Ritzel voneinander verschiedene Ritzelgrößen (z. B. voneinander verschiedene Durchmesser) aufweisen. Weiterhin sollen die verzahnten Ritzel vorzugsweise jeweils eine gleiche Zahnlückenform und/oder Zähnezahl aufweisen, was wiederum aus der Verwendung des (gleichen) zumindest einen weiteren Messerkopfs zum Verzahnen der jeweiligen Ritzel folgt. Auf vorteilhafte Weise kann somit jeweils ein geschliffener und eingestellter Messerkopf zum Verzahnen der Tellerräder und ein geschliffener und eingestellter Messerkopf zum Verzahnen der Ritzel und damit jeweils zum Verzahnen möglichst vieler Bauteile genutzt werden.

Es versteht sich dabei, dass die vorstehend beschriebene Ausführungen nicht davon abhängen, ob der "zumindest eine Messerkopf" bzw. der "zumindest eine weitere Messerkopf" zum Verzahnen der Tellerräder oder der Ritzel verwendet wird. Mit anderen Worten erfolgt das Verzahnen der Tellerräder und Ritzel analog zueinander, sodass die vorrangig allgemein für "Kegelräder" beschriebenen Merkmale auch jeweils auch im Speziellen für das Verzahnen von Tellerräder bzw. Ritzeln offenbart und beanspruchbar sein sollen.

Zu erwähnen ist weiterhin, dass im Kontext der Erfindung mit "Verzahnen" vorzugsweise ein Erzeugen einer Zahnung, ein Erzeugen von Zähnen und/oder ein Erzeugen von Zahnlücken insbesondere an Kegelrädern umfasst sein soll.

Weiterhin werden nach einem weiteren unabhängigen Aspekt Kegelräder bereitgestellt, die gemäß einem Verfahren, wie in diesem Dokument beschrieben, verzahnt sind. Wie vorstehend bereits ausgeführt worden ist, soll der Ausdruck Kegelräder dabei vorzugsweise sowohl Kegelräder mit als auch ohne Achsversatz umfassen, d. h. durch den Begriff "Kegelräder" sollen bevorzugt ausdrücklich auch Zahnräder mitumfasst sein, die gemeinhin als "Hypoidräder" bezeichnet werden. Weiterhin sollen die vorstehend im Zusammenhang mit dem Verfahren ausgeführten Merkmale auch im Zusammenhang mit den Kegelrändern selbst offenbart und beanspruchbar sein. Die Kegelräder können z. B. Tellerräder und/oder Ritzel sein.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben. Es zeigen:

Figur 1: ein Flussdiagramm eines Verfahrens zum Verzahnen von Kegelrädern gemäß einer Ausführungsform;

Figur 2A: Schnittdarstellungen verschiedene Kegelräder, nämlich Tellerräder, die nach einem im Stand der Technik bekannten Verfahren verzahnt sind;

Figur 2B: Schnittdarstellungen verschiedene Kegelräder, nämlich Tellerräder, die nach einem Verfahren gemäß einer Ausführungsform verzahnt sind;

Figur 3A: Schnittdarstellungen verschiedene Kegelräder, nämlich Ritzel, die nach einem im Stand der Technik bekannten Verfahren verzahnt sind;

Figur 3B: Schnittdarstellungen verschiedene Kegelräder, nämlich Ritzel, die nach einem Verfahren gemäß einer Ausführungsform verzahnt sind;

Figur 4: Darstellung einer Kegelradgeometrie im Axialschnitt; und

Figur 5: Darstellung einer Zahnlücke einer Verzahnung.

Gleiche oder funktional äquivalente Elemente sind in allen Figuren mit denselben Bezugszeichen beschrieben und zum Teil nicht gesondert beschrieben.

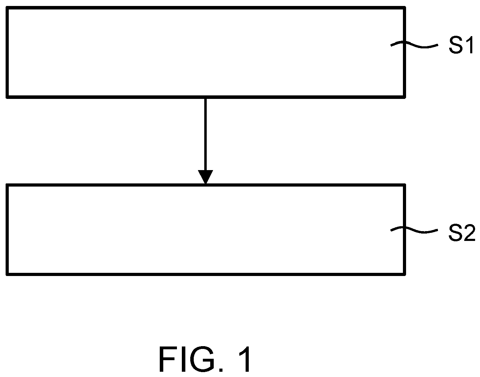

Figur 1 zeigt ein Flussdiagramm eines Verfahrens zum Verzahnen von Kegelrädern 40 gemäß einer Ausführungsform. Hierbei ist vorgesehen, dass die verzahnten Kegelräder 40 voneinander verschiedene Kegelradgrößen - z. B. vier verschiedene Kegelradgrößen 40a, 40b, 40c, 40d wie exemplarisch in Figur 2 und 3 dargestellt - aufweisen. Beispielsweise können die verzahnten Kegelräder 40 voneinander verschiedene Durchmesser (z. B. Teilkreisdurchmesser $d_e$, äußere Durchmesser $d_{ae}$ und/oder mittlere Teilkegel-Durchmesser $d_m$), verschiedene mittlere Teilkegellängen $R_m$, verschiedene Zahnbreiten b und/der verschiedene Rückenkegelwinkel aufweisen (siehe Definitionen der Größen in Figur 4). Die entsprechenden Kegelradgrößen (z. B. die Kegelradgrößen 40a, 40b, 40c, 40d) können sich dabei vorzugsweise auf Einbaumaße der verzahnten Kegelräder 40 beziehen.

Im Schritt S1 erfolgt ein Bereitstellen zumindest eines, vorzugsweise drehantreibbaren, Messerkopfs. Der zumindest eine Messerkopf kann zur Montage in einer Werkzeugmaschine ausgebildet sein. Lediglich beispielhaft kann es sich bei der Werkzeugmaschine um eine 6-Achsen-CNC-Kegelrad-Fräsmaschine oder eine 5-Achsen-CNC-Fräsmaschine handeln. Der zumindest eine Messerkopf kann mit Messern, z. B. Profil- und/oder Stabmessern, bestückt sein. Der zumindest eine Messerkopf kann Außen- und Innenschneiden aufweisende Messer aufweisen. Die Messer können vollprofilig arbeitende Messer sein, d. h. Messer deren Messerprofil den gesamten Zahnlückenquerschnitt ausfüllen. Der zumindest eine Messerkopf kann ferner eine vorgegebene, d. h. zuvor festgelegte, Messerkonfiguration aufweisen. D. h. der zumindest eine Messerkopf kann einen einzigen Messerkopf mit der vorgegebenen Messerkonfiguration oder mehrere (gleiche) Messerköpfe, die jeweils die vorgegebene Messerkonfiguration aufweisen, umfassen. Bevorzugt ist die Messerkonfiguration durch eine Anzahl, Anordnung und/oder Form von am zumindest einen Messerkopf vorhandenen Messern bestimmt. Beispielsweise kann die Messerkonfiguration durch zumindest einen Flugkreisradius, eine Gangzahl, eine Spitzenweite und/oder einen Fußrundungsradius charakterisiert sein.

Im Schritt S2 erfolgt ein Verzahnen, vorzugsweise Vorverzahnen, der Kegelräder 40 mittels des zumindest einen Messerkopfs. Die verschiedenen Kegelradgrößen (z. B. die Kegelradgrößen 40a, 40b, 40c, 40d) können somit alle mittels ein und desselben Messerkopfs oder mittels mehrerer Messerköpfe, die jeweils alle die gleiche vorgegebene Messerkonfiguration aufweisen, verzahnt werden. Beispielsweise können die mehreren Messerköpfen jeweils an verschiedenen Werkzeugmaschinen eingesetzt werden, sodass mehrere Kegelräder 40 gleichzeitig verzahnt werden können. Das Verzahnen kann ein spanabhebendes Bearbeiten, vorzugsweise ein Fräsen (z. B. Weichfräsen) der Kegelräder umfassen. Das Verzahnen kann als Trocken- oder Nassbearbeitung durchgeführt werden. Bevorzugt erfolgt das Verzahnen im Einzelteilverfahren, besonders bevorzugt im Completing-Verfahren. Das Verzahnen der Kegelräder 40 kann mit im Wesentlichen gleichen Maschineneinstellungen der Werkzeugmaschine und damit mit entsprechend gleicher Maschinenkinematik erfolgen.

Die vorgegebene Messerkonfiguration, mit derer die (verschieden großen) Kegelräder 40 verzahnt werden, kann z. B. zumindest einen Flugkreisradius, eine Spitzenweite, eine Kopfrücknahme, eine Fußrücknahme, einen Werkzeugeingriffswinkel und/oder einen Profilkrümmungsradius umfassen. Weiterhin können die Kegelräder jeweils mit im Wesentlichen dem gleichen Fußkegelwinkel $\delta r$ und/oder den gleichen Fußrundungsradien

$$\varrho_{f1},$$

$$\varrho_{f2}$$

verzahnt werden. Auf vorteilhafte Weise kann dadurch ein Umrüsten der Werkzeugmaschine vermieden werden. Entsprechend weisen die verzahnten Kegelräder 40 jeweils eine gleiche Zahnlückenform 34 und/oder Zähnezahl auf. Da die Zahnlückenform 34 und/oder die Zähnezahl in der Regel durch die den Messerkopf bzw. die Messerkonfiguration bestimmt wird, kann der Schritt S2 vorzugsweise auch umfassen, dass die Kegelräder mittels des zumindest einen Messerkopfs verzahnt werden, so dass die verzahnten Kegelräder jeweils eine gleiche Zahnlückenform 34 und/oder Zähnezahl, d. h. die Anzahl von Zähnen der Verzahnung, aufweisen. Bevorzugt weisen die Kegelräder somit ein gleiches Zahnlückenprofil bzw. einen gleichen Verlauf des Zahnlückenprofils auf. Weiterhin sollen die verzahnten Kegelräder 40 vorzugsweise einen Kreisbogen als Flankenlängslinie 32 aufweisen. Bei den verzahnten Kegelräder 40 kann es sich somit um Spiralkegelräder handeln.

Figur 2A zeigt Schnittdarstellungen (Axialschnitt) verschiedene Kegelräder 40, nämlich Tellerräder, die nach einem im Stand der Technik bekannten Verfahren verzahnt sind. Die Tellerräder wurden dabei im bekannten Completing-Verfahren verzahnt, sodass die Kegelräder 40 jeweils eine Duplex-Kegel-Zahnhöhenform aufweisen. Die verschiedenen Tellerräder weisen voneinander verschiedene Kegelradgrößen auf. Beispielhaft sind vorliegend vier verschiedene Kegelradgrößen 40a, 40b, 40c, 40d dargestellt. Insbesondere weisen die Tellerräder voneinander verschiedene äußere Durchmesser $d_{ae}$ auf. Weiterhin ist der Verlauf des Zahnfußgrunds 36 der verzahnten Tellerräder dargestellt. Der Verlauf des Zahnfußgrunds 36 kann im Folgenden auch kurz als "Zahnfußkurve" bezeichnet werden. Die jeweiligen Zahnfußkurven 36 unterscheiden sich in Form und Lage. Aufgrund der vier Kegelradgrößen 40a, 40b, 40c, 40d sind vorliegend somit vier Linienverläufe dargestellt. Des Weiteren sind die entsprechenden Verläufe des Zahnfußgrunds 36 über die jeweiligen Tellerradgrenzen hinaus verlängert. Wie aus den verschiedenen Zahnfußkurven in Figur 2A ersichtlich ist, werden bislang für verschiedene Kegel- bzw. Tellerradgrößen verschiedene Zahnlückenformen 34 und damit verschiedene Verläufe des Zahnfußgrunds 36 verwendet. Dies resultiert u. a. daraus, dass zum Verzahnen der verschiedenen Tellerradgrößen jeweils ein individueller Messerkopf bzw. eine individuelle Messerkonfiguration verwendet wird. Da die Fuß- und Kopfwinkel der Verzahnung, insbesondere im Completing-Verfahren, jedoch abhängig vom gewählten Messerkopf sind und nicht frei gewählt werden können, weisen die verschiedenen Kegel- bzw. Tellerradgrößen die dargestellten verschiedenen Zahnfußkurven 36 bzw. verschiedene Zahnlückenformen 34 auf. Insgesamt variiert die Zahnlückenformen 34 der verschiedenen Tellerräder mit der jeweiligen Tellerradgröße.

Demgegenüber zweigt Figur 2B entsprechende Schnittdarstellungen verschiedene Kegelräder 40, nämlich Tellerräder, die nach einem Verfahren gemäß einer Ausführungsform verzahnt sind. Die verschiedenen Kegel- bzw. Tellerradgrößen 40a, 40b, 40c, 40d entsprechen hierbei vorzugsweise im Wesentlichen den in Figur 2A gezeigten Größen. Die Tellerräder wurden wiederum im Completing-Verfahren verzahnt, sodass die Kegelräder 40 jeweils eine Duplex-Kegel-Zahnhöhenform aufweisen, wobei hier verschiedene Tellerräder jeweils mittels des gleichen Messerkopfs bzw. der gleichen Messerkonfiguration verzahnt wurden. Entsprechend weisen die verzahnten Tellerräder jeweils eine gleiche Zahnlückenform 34 auf. Dies ist insbesondere dadurch erkennbar, dass anstelle der Mehrzahl an verschiedenen Verläufen des Zahnfußgrunds 36, lediglich ein Verlauf vorhanden ist.

Um die entsprechende Zahnlückenform 34 bzw. Messerkonfiguration, welche zum Verzahnen aller Kegelräder 40 verwendet wird, zu bestimmen, kann die Zahnlückenform 34 bzw. Messerkonfiguration zunächst für ein Referenz-Kegelrad mit einem Referenz-Durchmesser festgelegt werden oder für ein Referenz-Kegelrad mit einem Referenz-Durchmesser aus einer Mehrzahl möglicher Messerkonfigurationen ausgewählt werden. Lediglich beispielhaft kann dieses Auslegen für ein Kegelrad 40 mittlerer Größe erfolgen, z. B. die Kegelradgröße 40c. Ausgehend von diesem Referenz-Kegelrad können sodann die Durchmesser der weiteren Kegelräder 40 um bis zu 30%, vorzugsweise um bis zu 15%, besonders bevorzugt um bis zu 10%, vom Referenz-Durchmesser abweichen.

Figur 3A zeigt Schnittdarstellungen (Axialschnitt) verschiedene Kegelräder 40, nämlich Ritzel, die nach einem im Stand der Technik bekannten Verfahren verzahnt sind. Bei den Ritzeln handelt es sich um zu den in Figur 2A gezeigten Tellerrädern zugehörige Ritzel. Entsprechend weisen auch die verschiedene Ritzel voneinander verschiedene Ritzel- bzw. Kegelradgrößen 40a, 40b, 40c, 40d auf. Auch die Ritzel wurden im bekannten Completing-Verfahren verzahnt. Analog zu den zugehörigen Tellerrädern, weisen auch die verschieden großen Ritzel jeweils unterschiedliche Zahnfußkurven 36 auf. Dies resultiert wiederum daraus, dass zum Verzahnen der verschiedenen Ritzelgrößen bislang jeweils ein individueller Messerkopf bzw. eine individuelle Messerkonfiguration verwendet wird. Entsprechend variiert auch bei den verzahnten Ritzeln die Zahnlückenformen 34 (vgl. Figur 5) der verschiedenen Ritzel mit der jeweiligen Ritzelgröße.

Demgegenüber zeigt Figur 3B Schnittdarstellungen (Axialschnitt) verschiedener Kegelräder 40, nämlich Ritzel, die nach einem Verfahren gemäß einer Ausführungsform verzahnt sind. Die verschiedenen Ritzelgrößen entsprechen hierbei vorzugsweise im Wesentlichen den in Figur 3A gezeigten Größen. Die Ritzel wurden wiederum im Completing-Verfahren verzahnt, wobei hier die verschiedenen Ritzel jeweils mittels des gleichen Messerkopfs bzw. der gleichen Messerkonfiguration verzahnt wurden. Bevorzugt sind die Ritzel dabei jeweils mit im Wesentlichen gleichen Fußkegelwinkel, mit im Wesentlichen gleichen Maschineneinstellungen und/oder den gleichen Werkzeugparametern (z. B. eine Spitzenweite, ein Eingriffswinkel, eine Kopfrücknahme, eine Fußrücknahme, ein Profilkrümmungsradius, ein Flugkreisradius und/oder ein Fußrundungsradius) verzahnt. Dies ermöglicht auf vorteilhafte Weise das Fertigen möglichst vieler Bauteile ohne Umrüsten der Werkzeugmaschine. Entsprechend weisen die verzahnten Ritzel - wie auch die zugehörigen Tellerräder-jeweils eine gleiche Zahnlückenform 34 (Figur 5) auf.

Figur 4 zeigt eine Darstellung einer Kegelradgeometrie im Axialschnitt, welche die in diesem Dokument verwendeten Kegelradgrößen veranschaulicht. Die Abbildung sowie die Nomenklatur ist dabei aus der ISO 23509 Norm bzw. dem Buch "Kegelräder - Grundlagen, Anwendungen", J. Klingelnberg, Springer, 2008 übernommen.

Figur 5 zeigt eine Darstellung einer Zahnlücke einer Verzahnung, welche die in diesem Dokument verwendeten Zahnformgrößen veranschaulicht. Auch diese Abbildung ist dabei aus der ISO 23509 Norm bzw. dem Buch "Kegelräder - Grundlagen, Anwendungen", J. Klingelnberg, Springer, 2008 übernommen. Bei der Verzahnung handelt es sich beispielhaft um eine Geradverzahnung. Die entsprechenden Definitionen sollen jedoch auch für andere Zahnradvarianten (z. B. Spiralkegelräder) gelten. Hervorzuheben ist, dass die Zahnlücke zwei Flanken 32, d. h. eine linke und rechte bzw. konkave und konvexe Flanke, umfasst. Deren Form (z. B. deren Krümmung) sowie der Verlauf deren Form entlang der Flankenlängslinie 33 können u.a. die Zahnlückenform 34 (mit)bestimmen. Des Weiteren kann die Zahnlückenform 34 durch eine Zahnlückenweite im Zahngrund 26, eine Zahnlückenweite in Teilkegelebene 27, einen Verlauf der Zahnfußlinie 35, einen Fußkegelwinkel 20, Fußrundungsradien 29, und/oder Kopf- und/oder Fußrücknahmen 30, 31 bestimmt sein.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.


**Bezugszeichenliste**

| | |
|---|---|
| 1 | Winkel der Fersenkante |
| 2 | Rückenkegelwinkel |
| 3 | Rückenkegellänge |
| 4 | Kopfgrundspiegel |
| 5 | Kopfkonturpunkt Ferse |
| 6 | Abstand äußerer Kopfkegelkante zur Einbaufläche |
| 7 | Zahnfußwinkel |
| 8 | Kopfkegelwinkel |
| 9 | Zahnbreite |
| 10 | Winkel der Zahenkante |
| 11 | mittlere Teilkegellänge |
| 12 | Auslegungspunkt |
| 13 | Einbaumaß |
| 14 | äußere Teilkegellänge |
| 15 | äußerer Durchmesser, $d_{ae}$ |
| 16 | Teilkegelwinkel |
| 17 | Berührungspunkt der Teilkegelspitzen |
| 18 | Abstand äußere Kopfkegelkante zum Kreuzungspunkt |
| 19 | äußerer Teilkreisdurchmesser, $d_e$ |
| 20 | Fußkegelwinkel, $\delta r$ |
| 21 | Achswinkel |
| 22 | äquivalenter Teilkreisradius |

| 23 | mittlerer Teilkegel-Durchmesser, $d_m$ |
|---|---|
| 24 | Zahnhöhe |
| 25 | Zahndicke |
| 26 | Zahnlückenweite im Zahngrund, $w_g$ |
| 27 | Zahnlückenweite in Teilkegelebene, $w_m$ |
| 28 | Fußrundung |
| 29 | Fußrundungsradius, |

$$\varrho_{f1}, \varrho_{f2}$$

| 30 | Kopfrücknahme |
|---|---|
| 31 | Fußrücknahme |
| 32 | Flanke |
| 33 | Flankenlängslinie |
| 34 | Zahnlückenform |
| 35 | Zahnfußlinie |
| 36 | Zahnfußgrund |
| 40 | Kegelrad |
| 40a, 40b, 40c, 40d | Kegelradgrößen |

**Patentansprüche**

1. Verfahren zum, vorzugsweise automatisierten und/oder maschinellen, Verzahnen von Kegelrädern (40), wobei die verzahnten Kegelräder (40) voneinander verschiedene Kegelradgrößen (40a, 40b, 40c, 40d), vorzugsweise voneinander verschiedene Durchmesser ($d_m$, $d_{ae}$, $d_e$), aufweisen,

   wobei zumindest ein, vorzugsweise drehantreibbarer, Messerkopf bereitgestellt wird, der eine vorgegebene Messerkonfiguration aufweist; und
   wobei die Kegelräder (40) mittels des bereitgestellten zumindest einen Messerkopfs, vorzugsweise im Einzelteilverfahren, verzahnt, vorzugsweise vorverzahnt, werden, wobei die verzahnten Kegelräder (40) jeweils eine gleiche Zahnlückenform und/oder Zähnezahl aufweisen.

2. Verfahren nach Anspruch 1, wobei:

   - die Kegelräder (40) jeweils im Completing-Verfahren verzahnt werden; und/oder
   - die verzahnten Kegelräder (40) jeweils eine Duplex-Kegel-Zahnhöhenform oder eine Duplex-Kegel-ähnliche Zahnhöhenform aufweisen.

3. Verfahren nach einem der vorherigen Ansprüche, wobei die Kegelräder (40) jeweils mit im Wesentlichen dem gleichen Fußkegelwinkel ($\delta_f$) und/oder den gleichen Fußrundungsradien

$$(\varrho_{f1}, \varrho_{f2})$$

   verzahnt werden.

4. Verfahren nach einem der vorherigen Ansprüche, wobei die vorgegebene Messerkonfiguration des zumindest einen Messerkopfs zumindest einen vorgegebenen Flugkreisradius, eine vorgegebene Spitzenweite, eine vorgegebene Kopfrücknahme, eine vorgegebene Fußrücknahme, einen vorgegebenen Werkzeugeingriffswinkel und/oder einen vorgegebenen Profilkrümmungsradius umfassen.

5. Verfahren nach einem der vorherigen Ansprüche, wobei:

   die vorgegebene Messerkonfiguration für ein Referenz-Kegelrad mit einem Referenz-Durchmesser festgelegt wird oder aus einer Mehrzahl möglicher Messerkonfigurationen ausgewählt wird; und
die verschiedenen Durchmesser ($d_m$, $d_{ae}$, $d_e$) der verzahnten Kegelräder (40) um bis zu 30%, vorzugsweise um bis zu 15%, besonders bevorzugt um bis zu 10%, vom Referenz-Durchmesser abweichen.

6. Verfahren nach einem der vorherigen Ansprüche, wobei die Zahnlückenform zumindest eine der folgenden Größen umfasst:

- eine Zahnlückenweite im Zahngrund ($w_g$);
- eine Zahnlückenweite in Teilkegelebene ($w_m$);
- einen Verlauf des Zahnfußgrunds;
- eine Flankenform, vorzugsweise eine Krümmung der Flanken.

7. Verfahren nach einem der vorherigen Ansprüche, wobei jeweilige Zahnfußkurven zweier verzahnter Kegelräder (40) mit verschiedenen Kegelradgrößen (40a, 40b, 40c, 40d) im Axialschnitt im Bereich eines kleineren der zwei verzahnten Kegelräder (40) übereinander liegen.

8. Verfahren nach einem der vorherigen Ansprüche, wobei die Kegelräder (40) verzahnt werden, indem mittels des zumindest einen Messerkopfs jeweils eine Verzahnung in Kegelradrohlinge erzeugt wird, wobei die Kegelradrohlinge vorzugsweise:

- voneinander verschiedene Größen, vorzugsweise voneinander verschiedene Durchmesser, aufweisen; und/oder
- jeweils eine Kontur aufweisen, die außerhalb eines jeweiligen Zerspanungsbereichs des zumindest einen Messerkopfs bereits im Wesentlichen einer Fertigkontur des jeweiligen verzahnten Kegelrads (40) entspricht.

9. Verfahren nach einem der vorherigen Ansprüche, wobei der zumindest eine Messerkopf:

ausschließlich einen Messerkopf umfasst; oder
mehrere, vorzugsweise gleiche, Messerköpfe umfasst, die jeweils die vorgegebene Messerkonfiguration aufweisen.

10. Verfahren nach einem der vorherigen Ansprüche, wobei:
die verzahnten Kegelräder (40) jeweils wärmebehandelt, vorzugsweise gehärtet, werden.

11. Verfahren nach einem der vorherigen Ansprüche, wobei:

zumindest ein, vorzugsweise drehantreibbarer, Schleifkopf bereitgestellt wird,; und
die verzahnten, und vorzugsweise wärmebehandelten, Kegelräder (40) mittels des zumindest einen Schleifkopfs geschliffen werden.

12. Verfahren nach Anspruch 11, wobei:

die verzahnten, und vorzugsweise wärmebehandelten, Kegelräder (40) jeweils mit zumindest teilweise unterschiedlichen Schleifscheibenkonfigurationen des zumindest einen Schleifkopfs geschliffen werden, wobei sich vorzugsweise, falls die Kegelräder (40) mit entsprechenden Bearbeitungszugaben verzahnt wurden, die unterschiedlichen Schleifscheibenkonfigurationen im Wesentlichen um die entsprechenden Bearbeitungszugaben unterscheiden oder bezüglich zusätzlich eingebrachter Kopfrücknahmen, Fußrücknahmen und/oder Profilballigkeiten unterscheiden.

13. Verfahren nach Anspruch 11, wobei:

die verzahnten, und vorzugsweise wärmebehandelten, Kegelräder jeweils mit einer gleichen vorgegebenen Schleifscheibenkonfiguration des zumindest einen Schleifkopfs geschliffen werden, wobei vorzugsweise Werkzeugparameter, wie z. B. eine Kopfrücknahme, eine Fußrücknahme und/oder ein Werkzeugeingriffswinkel, der Schleifscheibenkonfiguration und der Messerkonfiguration

- im Wesentlichen gleich sind; oder
- falls die Kegelräder (40) mit entsprechenden Bearbeitungszugaben verzahnt wurden, sich im Wesentlichen um die entsprechenden Bearbeitungszugaben unterscheiden oder bezüglich zusätzlich eingebrachter Kopfrücknahmen, Fußrücknahmen und/oder Profilballigkeiten unterscheiden.

14. Verfahren nach einem der vorherigen Ansprüche, wobei:

die Kegelräder (40) Tellerräder umfassen;
wobei zumindest ein, vorzugsweise drehantreibbarer, weiterer Messerkopf bereitgestellt wird, der eine vorgegebene weitere Messerkonfiguration aufweist; und
wobei Ritzel, welche jeweils einem der Tellerräder zugeordnet sind, mittels des bereitgestellten zumindest einen weiteren Messerkopfs, vorzugsweise im Einzelteilverfahren, verzahnt, vorzugsweise vorverzahnt, werden, wobei die verzahnten Ritzel jeweils eine gleiche Zahnlückenform und/oder Zähnezahl aufweisen und voneinander verschiedene Ritzelgrößen, vorzugsweise voneinander verschiedene Ritzel-Durchmesser, aufweisen.

15. Kegelräder (40), die nach einem Verfahren gemäß einem der vorherigen Ansprüche verzahnt sind.

FIG. 1

Stand der Technik

FIG. 2A

FIG. 2B

Stand der Technik

FIG. 3A

FIG. 3B

| 1 | Winkel der Fersenkante | 13 | Einbaumaß $t_{B1}$, $t_{B2}$ |
| 2 | Rückenkegelwinkel | 14 | äußere Teilkegellänge, $R_e$ |
| 3 | Rückenkegellänge | 15 | äußerer Durchmesser, $d_{ae1}$, $d_{ae2}$ |
| 4 | Kopfgrundspiel, c | 16 | Teilkegelwinkel, $\delta_1$, $\delta_2$ |
| 5 | Kopfkonturpunkt Ferse | 17 | Berührungspunkt der Teilkegelspitzen |
| 6 | Abstand äußere Kopfkegelkante zur Einbaufläche | 18 | Abstand äußere Kopfkegelkante zum Kreuzungspunkt, $t_{xo1}$, $t_{xo2}$ |
| 7 | Zahnfußwinkel, $\theta_{f1}$, $\theta_{f2}$ | 19 | äußerer Teilkreisdurchmesser, $d_{e1}$, $d_{e2}$ |
| 8 | Kopfkegelwinkel $\delta_{a1}$, $\delta_{a2}$ | 20 | Fußkegelwinkel, $\delta_{f1}$, $\delta_{f2}$ |
| 9 | Zahnbreite, b | 21 | Achswinkel, $\Sigma$ |
| 10 | Winkel der Zehenkante | 22 | äquivalenter Teilkreisradius |
| 11 | mittlere Teilkegellänge, $R_m$ | 23 | mittlerer Teilkegel-Durchmesser, $d_{m1}$, $d_{m2}$ |
| 12 | Auslegungspunkt | | |

# FIG. 4

| | |
|---|---|
| 24 Zahnhöhe | 32 Flanke |
| 25 Zahndicke | 33 Flankenlängslinie |
| 26 Zahnlückenweite im Zahngrund $w_g$ | 34 Zahnlückenform |
| 27 Zahnlückenweite in Teilkegelebene $w_m$ | 35 Zahnfußlinie |
| 28 Fußrundungen | 36 Zahnfußgrund |
| 29 Fußrundungsradien $\varrho_{f1},\ \varrho_{f2}$ | |
| 30 Kopfrücknahme | |
| 31 Fußrücknahme | |

FIG. 5

Europäisches Patentamt
European Patent Office
Office européen des brevets

## EUROPÄISCHER RECHERCHENBERICHT

Nummer der Anmeldung

EP 23 15 6012

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/321404 A1 (RIBBECK KARL-MARTIN [DE]) 20. Dezember 2012 (2012-12-20) | 1,3-7,9, 10,14,15 | INV. B23F5/20 |
| Y | * Absätze [0012] - [0015], [0048] - [0080]; Abbildungen 2-3 * | 2,8, 11-13 | B23F9/12 B23F21/12 B23F21/22 |
| Y | DE 20 2014 105422 U1 (KLINGELNBERG AG [CH]) 19. November 2014 (2014-11-19) * Absatz [0011] * | 2 | |
| Y | US 2021/402495 A1 (RIBBECK KARL-MARTIN [DE] ET AL) 30. Dezember 2021 (2021-12-30) * Absatz [0005] * | 8 | |
| Y | DE 195 17 360 C1 (KLINGELNBERG SOEHNE [DE]) 23. Mai 1996 (1996-05-23) * Spalte 2, Zeile 38 - Spalte 4, Zeile 7 * | 11-13 | |
| A | US 2019/022779 A1 (STADTFELD HERMANN J [US] ET AL) 24. Januar 2019 (2019-01-24) * Absätze [0014], [0032], [0041], [0049] * | 1-15 | |
| A | US 2018/056416 A1 (RIBBECK KARL MARTIN [DE]) 1. März 2018 (2018-03-01) * Absätze [0043] - [0052] * | 1-15 | |

RECHERCHIERTE SACHGEBIETE (IPC)

B23F

Der vorliegende Recherchenbericht wurde für alle Patentansprüche erstellt

| Recherchenort | Abschlußdatum der Recherche | Prüfer |
|---|---|---|
| Den Haag | 29. Juni 2023 | Beltzung, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 6012

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2023

| Im Recherchenbericht angeführtes Patentdokument | Datum der Veröffentlichung | Mitglied(er) der Patentfamilie | Datum der Veröffentlichung |
|---|---|---|---|
| US 2012321404 A1 | 20-12-2012 | CN 102962528 A | 13-03-2013 |
| | | EP 2535134 A1 | 19-12-2012 |
| | | JP 2013000879 A | 07-01-2013 |
| | | KR 20120139595 A | 27-12-2012 |
| | | US 2012321404 A1 | 20-12-2012 |
| DE 202014105422 U1 | 19-11-2014 | CN 205559725 U | 07-09-2016 |
| | | DE 202014105422 U1 | 19-11-2014 |
| | | EP 3021006 A2 | 18-05-2016 |
| | | JP 3202253 U | 28-01-2016 |
| | | US 2016131241 A1 | 12-05-2016 |
| US 2021402495 A1 | 30-12-2021 | CN 113843457 A | 28-12-2021 |
| | | DE 102020116893 A1 | 30-12-2021 |
| | | US 2021402495 A1 | 30-12-2021 |
| DE 19517360 C1 | 23-05-1996 | DE 19517360 C1 | 23-05-1996 |
| | | WO 9635541 A2 | 14-11-1996 |
| US 2019022779 A1 | 24-01-2019 | BR 112018014035 A2 | 11-12-2018 |
| | | CN 108602145 A | 28-09-2018 |
| | | EP 3411175 A1 | 12-12-2018 |
| | | JP 7053472 B2 | 12-04-2022 |
| | | JP 2019503877 A | 14-02-2019 |
| | | KR 20180109912 A | 08-10-2018 |
| | | US 2019022779 A1 | 24-01-2019 |
| | | WO 2017136329 A1 | 10-08-2017 |
| US 2018056416 A1 | 01-03-2018 | CN 107755826 A | 06-03-2018 |
| | | EP 3287221 A1 | 28-02-2018 |
| | | JP 6602350 B2 | 06-11-2019 |
| | | JP 2018051752 A | 05-04-2018 |
| | | US 2018056416 A1 | 01-03-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Nicht-Patentliteratur**

- **J. KLINGELNBERG.** Kegelräder - Grundlagen, Anwendungen. Springer, 2008